# FASCICULE DE BREVET EUROPEEN

(11) **EP 2 469 673 B1**
(45) Date de publication et mention de la délivrance du brevet: **19.03.2014**
(21) Numéro de dépôt: 11194654.7
(22) Date de dépôt: 20.12.2011
(51) Int. Cl.: H02G 3/32, B60R 16/00, B60R 16/02

(54) **Dispositif de maintien d'au moins un élément longitudinal, de type faisceau de câbles ou tube sur un support**
Vorrichtung zur Befestigung mindestens eines länglichen Elements vom Typ Kabelstrang oder Rohrträger
Device for supporting at least one longitudinal element, such as a bundle of cables or a tube on a mounting.

(30) Priorité: 23.12.2010 FR 1061207
(43) Date de publication de la demande: 27.06.2012
(73) Titulaire: Amphenol Air LB, 08110 Blagny (FR)
(72) Inventeur: Devouge, Laurent, 08370 Margut (FR)
(74) Mandataire: Delprat, Olivier

(56) Documents cités:
- EP-A1- 0 791 997
- DE-C1- 19 509 349
- US-A- 3 916 488
- "SOFT CABLE RETAINER WITH SNAP-IN FEATURE", IBM TECHNICAL DISCLOSURE BULLETIN, INTERNATIONAL BUSINESS MACHINES CORP. (THORNWOOD), US, vol. 32, no. 11, 1 avril 1990 (1990-04-01) , page 31/32, XP000097592, ISSN: 0018-8689

## Description

L'invention concerne, de manière générale les colliers de câblage et se rapporte plus particulièrement à un dispositif de maintien d'un faisceau de câbles ou d'un tube sur un support.

Une application particulièrement intéressante d'un tel dispositif concerne le maintien d'un faisceau de câbles ou d'un tube sur la structure interne d'un aéronef ou dans tout autre domaine industriel.

Mais l'invention se rapporte, de manière générale, à la fixation d'un faisceau d'éléments longitudinaux ou d'un tube sur une structure.

Comme on le sait, dans le domaine du câblage pour l'aéronautique, un grand nombre de colliers sont susceptibles d'être utilisés pour le maintien de l'ensemble des faisceaux de câbles du réseau de bord d'un aéronef. Les gains en poids étant l'une des préoccupations constantes qui s'imposent aux équipementiers intervenant dans le domaine de l'aéronautique, cette exigence s'impose également dans le domaine des équipements de câblage et, en particulier, en ce qui concerne les colliers de maintien de faisceau de câbles.

Dans l'état de la technique, les dispositifs de maintien de faisceaux de câbles étaient réalisés à partir d'un collier métallique réalisé à partir d'une patte recourbée en forme d'arc de cercle et entourée d'un fourreau de silicone, comme dans US 3 916 488.

La réalisation du collier à partir d'une patte métallique, bien qu'avantageuse en terme de flexibilité, présentait un inconvénient majeur en raison de son poids.

Il a en outre été constaté que le fourreau de silicone avait tendance à glisser le long du collier et ou à se déchausser transversalement ce qui, d'une part, le rendait moins efficace, en ce qui concerne sa fonction de maintien de câbles et, d'autre part, était susceptible, à la longue, d'altérer le faisceau de câbles.

Le but de l'invention est donc de palier cet inconvénient et de proposer un dispositif de maintien d'un faisceau de câbles ou d'un tube et, de manière générale, d'un élément longitudinal ou d'un faisceau d'éléments longitudinaux, de poids réduit et garantissant le bon positionnement de la couche protectrice.

L'invention a donc pour objet un dispositif de maintien d'au moins un élément longitudinal, de type faisceau de câbles ou tube, sur un support, comprenant un collier déformable permettant l'insertion dudit élément longitudinal dans le collier et le maintien de l'élément longitudinal et une couche protectrice revêtant au moins en partie le collier.

Selon une caractéristique générale de ce dispositif, le collier est réalisé en matière thermoplastique, la couche protectrice étant surmoulée sur le collier.

Selon une autre caractéristique de ce dispositif, la couche de matériau protecteur comporte du silicone.

Par exemple, le collier est réalisé en polyétherétherkétone (Peek).

Dans un mode de réalisation, la couche protectrice s'étend le long de la face interne concave du collier.

Par exemple, les extrémités mutuellement opposées du collier sont chacune dotées d'une patte pourvue d'un trou pour la fermeture du collier et sa fixation sur la structure. Dans ce cas, la couche protectrice peut se prolonger sur au moins une partie des faces en regard des pattes.

Dans un mode de réalisation, la couche protectrice peut être rainurée.

Le collier peut encore comporter au niveau de la zone de jonction avec les pattes une épaisseur accrue, pour éviter tout risque de pincement d'un câble du toron entre les pattes lors de la fermeture du dispositif. Dans ce cas, des évidements peuvent être prévus dans le collier au niveau de ladite zone de jonction. On réduit alors encore la masse du collier.

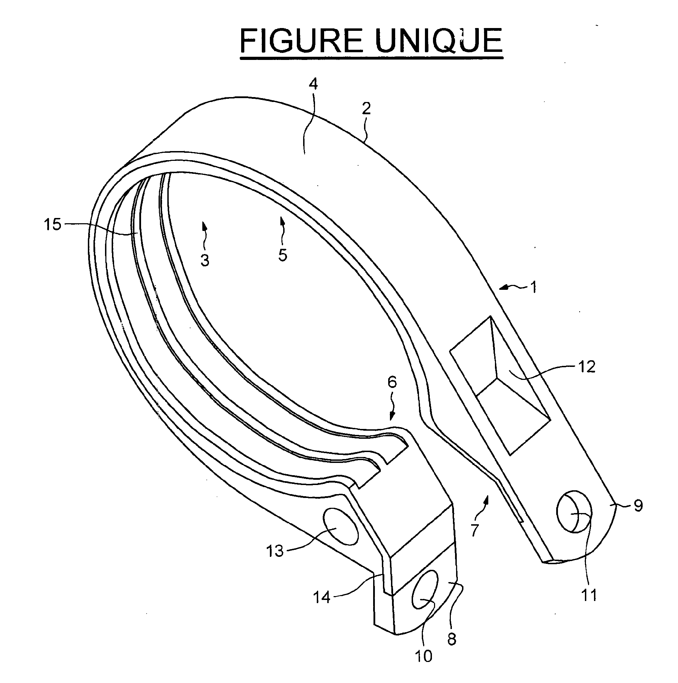

D'autres buts, caractéristiques et avantages de l'invention apparaitront à la lecture de la description suivante, donnée uniquement à titre d'exemple non limitatif, et faite en référence au dessin annexé qui illustre une vue en perspective d'un dispositif de maintien d'un faisceau de câbles selon l'invention.

Le dispositif de maintien d'un faisceau de câbles illustré sur la figure annexée, désigné par la référence numérique générale 1, est ici destiné au maintien d'un toron de câbles sur la structure interne d'un aéronef. Mais on ne sort pas du cadre de l'invention lorsqu'il est destiné à la fixation de tout autre type d'éléments longitudinaux, en particulier dans le domaine industriel.

Comme on le voit, ce dispositif 1 est essentiellement constitué d'un collier 2 comprenant une zone 3 partiellement annulaire, c'est-à-dire ouverte, ayant une surface externe 4 convexe et une surface interne 5 concave assurant le maintien proprement dit du faisceau de câbles. Les extrémités en regard 6 et 7 de la zone annulaire 3 se prolongent par des pattes 8 et 9 pourvues chacune d'un trou 10 et 11.

On notera que le collier 2 est réalisé en une seule pièce en matière thermoplastique injectée, par exemple en polyétherétherkétone, également connue sous le terme de *« PEEK* ». Un tel matériau thermoplastique présente un poids relativement faible, en comparaison des matériaux de type aluminium ou inox utilisés selon l'état de la technique. Il est en outre capable de se déformer aisément pour revenir dans sa position initiale, tel que visible sur la figure annexée.

Le collier 2 est ainsi capable de se déformer entre une position ouverte, permettant l'insertion de câbles et une position fermée de maintien des câbles sur la structure. On notera que, de préférence, grâce à la réalisation du collier en Peek, celui-ci peut adopter une position totalement ouverte, sensiblement à plat, permettant un positionnement aisé du toron, tout en revenant à sa position d'origine illustrée sur la figure. En choisissant un collier de dimensions appropriées, dans cette position, le toron peut être maintenu avant fermeture du collier, grâce à un effort élastique qui s'exerce alors sur le toron.

Le collier peut alors être fermé soit en appliquant les pattes d'extrémité l'une sur l'autre et en les fixant sur la structure, par exemple à l'aide d'une vis, soit en utilisant un autre système de fixation.

On notera à cet égard que l'une des pattes, à savoir la patte désignée par la référence 8, s'étend latéralement par rapport à l'extrémité correspondante de la partie annulaire tandis que l'autre patte, à savoir la patte référencée 9 s'étend dans le prolongement de l'extrémité opposée de la partie annulaire de sorte que en position fermée du collier les deux pattes viennent s'emboiter l'une contre l'autre.

Pour parfaire l'assemblage et augmenter la rigidité du collier, dans la zone de jonction entre la partie annulaire et les pattes d'extrémité, le collier présente une épaisseur accrue pour éviter tout risque de pincement d'un câble du toron entre les pattes d'extrémité 8 et 9, lors de la fermeture du dispositif. On prévoira toutefois des évidements, tels que 12 et 13, localisés dans cette zone de jonction afin de diminuer le poids de l'ensemble.

Le dispositif 1 est encore pourvu d'une couche protectrice recouvrant la face concave du collier 2 et s'étendant le long d'une partie substantielle des pattes d'extrémité 8 et 9, par exemple jusqu'aux trous 10 et 11.

On prévoira ainsi, par exemple, une empreinte 14 le long de la face du collier destiné à recevoir cette couche protectrice.

Alors que le collier 2 est réalisé en matériau thermoplastique, la couche protectrice 14 est quant à elle réalisée en silicone. Par silicone, on entend ici un polymère siliconé. L'emploi de la silicone permet, grâce à ses propriétés élastiques un maintien efficace du toron. En outre, la présence de cette couche de silicone au niveau des pattes permet d'éviter tout risque d'altération des câbles en cas de pincement lors de la fermeture du dispositif.

Afin d'obtenir une bonne cohésion entre le silicone et le collier 2, la couche protectrice siliconée est réalisée par surmoulage permettant d'éviter tout risque de déchaussement de la couche protectrice.

Il a été constaté que l'emploi combiné d'un collier réalisé en matériau thermoplastique et d'une couche protectrice surmoulée en silicone permettait d'obtenir un gain en poids relativement important de l'ordre de 50% par rapport à l'état de la technique. Il a en effet été constaté qu'un collier destiné au maintien d'un faisceau de câbles de diamètre de 42 mm présentait un poids de l'ordre de 10,5 g.

On notera enfin que dans le but de faciliter le maintien du faisceau de câbles sans le bloquer, on prévoira des nervures longitudinales, telles 15, prévues dans la couche protectrice 14 lors du surmoulage.

## Revendications

1. Dispositif de maintien d'un faisceau d'au moins un élément longitudinal, de type faisceau de câbles, sur un support, comprenant un collier (2) déformable permettant l'insertion dudit élément longitudinal dans le collier et le maintien de l'élément longitudinal et une couche protectrice (14) revêtant au moins en partie le collier, **caractérisé en ce que** le collier (2) est réalisé en matière thermoplastique et **en ce que** la couche protectrice (14) est surmoulée sur le collier, et **en ce que** la couche de matière protectrice comporte du silicone.

2. Dispositif selon la revendication 1, **caractérisé en ce que** le collier est réalisé en polyétheréthercétone.

3. Dispositif selon l'une quelconque des revendications 1 à 2, **caractérisé en ce que** la couche protectrice (14) s'étend le long de la face interne concave du collier.

4. Dispositif selon la revendication 3, **caractérisé en ce que** les extrémités mutuellement opposées du collier étant chacune pourvue d'une patte (8, 9) pourvue d'un trou pour la fermeture du collier et sa fixation sur la structure, la couche protectrice (14) se prolonge sur au moins une partie des faces en regard des pattes.

5. Dispositif selon la revendication 4, **caractérisé en ce que** le collier comporte au niveau de la zone de jonction avec les pattes une épaisseur accrue et des évidements localisés au niveau de ladite zone de jonction,

6. Dispositif selon l'une quelconque des revendications 1 à 5, **caractérisé en ce que** la couche protectrice (14) est nervurée.

## Patentansprüche

1. Vorrichtung zur Befestigung eines Strangs von mindestens einem länglichen Element vom Typ Kabelstrang auf einem Träger, umfassend einen verformbaren Haltering (2), der das Einsetzen des länglichen Elements in den Haltering und das Befestigen des länglichen Elements gestattet, und eine Schutzschicht (14), die mindestens teilweise den Haltering bedeckt, **dadurch gekennzeichnet, dass** der Haltering (2) aus thermoplastischem Material hergestellt ist und dass die Schutzschicht (14) an den Haltering angegossen ist und dass die Schicht aus Schutzmaterial Silikon aufweist.

2. Vorrichtung nach Anspruch 1, **dadurch gekennzeichnet, dass** der Haltering aus Polyetheretherketon hergestellt list.

3. Vorrichtung nach einem der Ansprüche 1 bis 2, **dadurch gekennzeichnet, dass** sich die Schutzschicht (14) entlang der konkaven Innenfläche des Halterings erstreckt.

4. Vorrichtung nach Anspruch 3, **dadurch gekennzeichnet, dass** sich, nachdem die einander gegenüberliegenden Enden des Halterings jeweils mit einer Lasche (8, 9) versehen sind, die mit einem Loch zum Verschließen des Halterings und seiner Befestigung an der Struktur versehen ist, die Schutzschicht (14) über mindestens einen Teil der den Laschen gegenüberliegenden Flächen erstreckt.

5. Vorrichtung nach Anspruch 4, **dadurch gekennzeichnet, dass** der Haltering am Verbindungsbereich mit den Laschen eine erhöhte Dicke und Aussparungen, die an diesem Verbindungsbereich angeordnet sind, aufweist.

6. Vorrichtung nach einem der Ansprüche 1 bis 5, **dadurch gekennzeichnet, dass** die Schutzschicht (14) gerippt ist.

## Claims

1. Device for holding a bundle of at least one longitudinal element, of the wiring harness type, on a support, comprising a deformable clamp (2) that allows said longitudinal element to be inserted into the clamp and holds the longitudinal element, and a protective layer (14) that at least partially covers the clamp, **characterized in that** the clamp (2) is made of thermoplastic and **in that** the protective layer (14) is overmoulded onto the clamp, and **in that** the layer of protective material contains silicone.

2. Device according to Claim 1, **characterized in that** the clamp is made of polyetheretherketone.

3. Device according to either one of Claims 1 and 2, **characterized in that** the protective layer (14) extends along the concave internal face of the clamp.

4. Device according to Claim 3, **characterized in that**, with the mutually opposite ends of the clamp each being provided with a tab (8, 9) provided with a hole for closing the clamp and attaching it to the structure, the protective layer (14) extends over at least part of the mutually-opposing faces of the tabs.

5. Device according to Claim 4, **characterized in that** the clamp comprises, at the region of connection with the tabs, an increased thickness and localized recesses at said region of connection.

6. Device according to any one of Claims 1 to 5, **characterized in that** the protective layer (14) is ribbed.
